# EUROPEAN PATENT SPECIFICATION

(11) **EP 0 426 331 B1**
(45) Date of publication and mention of the grant of the patent: **01.10.1997**
(21) Application number: 90311376.9
(22) Date of filing: 17.10.1990
(51) Int. Cl.: G06F 13/24, G06F 13/26

(54) **Programmable interrupt controller and method**
Programmierbare Unterbrechungssteuerung
Dispositif et procédé de commande d'interruption programmable

(30) Priority: 03.11.1989 US 431275
(43) Date of publication of application: 08.05.1991
(73) Proprietor: INTERNATIONAL BUSINESS MACHINES CORPORATION, Armonk, NY 10504 (US)
(72) Inventor: Lyford, Avery Martin, Boca Raton, Florida. 33432 (US); Moeller, Dennis Lee, Delray Beach, Florida 33444 (US); Klim, Peter Juergen, Deerfield Beach, Florida 33442 (US)
(74) Representative: Burt, Roger James, Dr.

(56) References cited:
- EP-A- 283 581
- EP-A- 358 330

## Description

The present invention generally relates to a programmable interrupt controller for a computer system and, more particularly, to an interrupt controller having a plurality of interrupt request inputs, each of which may be programmed to detect either edge-triggered or level-triggered interrupt requests on a per input basis.

Many computer systems are designed to interface with one or more peripheral devices. A computer system typically includes a central processing unit (CPU) connected to a system bus having data, address, and control lines. The bus is connected to other computer system components, such as program memory, and also to peripheral devices via a suitable interface. The interface may include interface devices for translating voltages or signal formats for compatibility between the computer system and the peripheral devices. Suitable interface connectors are often employed. Communication between the CPU and the peripheral devices can include sensory or command information. Specifically, a peripheral device acting as a sensor may produce data signals indicative of parameters the peripheral sensing device is sensing, such as temperature, voltage, or other parameters. The data signals may be translated to a suitable form and read through the interface by the CPU to provide the CPU with needed data regarding the sensed parameters. Alternatively, the peripheral devices may be controllers. The CPU commands a peripheral controlling device by writing suitable commands through the interface to the peripheral controlling device. The device then takes suitable action in accordance with the command.

In a system including a plurality of peripheral devices, frequent or continuing communication between the CPU and the peripheral devices is often necessary. Various schemes have been used for keeping the CPU in touch with the peripheral devices. A first scheme is called polling. In a polling system, the CPU executes a polling routine at intervals of time. Typically, a hardware timer will cause the CPU to execute the polling routine periodically. During the polling routine, the CPU reads information from the peripheral devices indicating whether the status of a sensed parameter has changed or whether there is a need to send a command to the peripheral device. Depending on the information received from a given peripheral device during the polling routine, the CPU takes appropriate action, such as sending commands to the peripheral device or updating a record of the status of the peripheral device stored in computer system memory. Polling is commonly used in computer systems which interface with a large number of peripheral devices. However, polling has the disadvantage that the polling routine must be executed frequently, thereby consuming a large amount of CPU processing time. In many instances, the status information read from the peripheral devices indicates that no action is necessary. Thus, the time spent executing the polling routine in retrospect proves to be unproductive. In computer system involving a great deal of activity or real-time applications, the time spent repeating the polling routine can reduce processing efficiency.

As an alternative to polling, computer systems often service peripheral devices by means of interrupts. In an interrupt system, a peripheral device sends a signal called an interrupt request when a condition is detected requiring some type of action by the CPU. Many CPUs are designed to include interrupt request input lines. A CPU having such an interrupt request input responds to a predetermined voltage signal on the interrupt request line by executing an interrupt service routine. Thus, an interface between a CPU and a peripheral device can include circuitry which detects a change of status in the peripheral device for which service is required and provides a suitable interrupt request signal to the CPU.

An interrupt driven system of this type provides improved processing efficiency since interrupt routines are executed only when required. However, frequently a CPU will be employed to service a plurality of peripheral devices. In such a system, questions arise as to how to go about determining which peripheral device needs to be serviced in response to an interrupt request. Also, if several peripheral devices simultaneously provide interrupt request signals, there must be a way of determining which one is serviced first. In order to provide practical answers to these questions, programmable interrupt controllers have been designed and utilized in conjunction with computer systems. An interrupt controller typically has a single interrupt request output which is connected to the interrupt request input of the CPU. The interrupt controller also has a plurality of interrupt request inputs. Each interrupt request input in connected to a peripheral device. Thus, when the peripheral device requires servicing, it produces a suitable interrupt request signal which is received by the interrupt controller. The interrupt controller then interrupts the CPU and causes a suitable interrupt service routine to be executed.

A well known example of an interrupt controller is the 8259A programmable interrupt controller manufactured by Intel Corporation. The 8259A is designed to operate with two different types of microprocessors which support multiple interrupt request inputs in two different ways. The first type is exemplified by the Intel 8080/8085 microprocessors which service interrupt requests by executing a software instruction for calling a subroutine which has as an operand an address of a subroutine. The second type is exemplified by the Intel 8086 microprocessor which services interrupt requests by using an 8-bit vector to select an interrupt service routine address from a table of addresses stored in a contiguous page of memory. Depending on which type of microprocessor the 8259A is programmed for, in response to an interrupt request input, the 8259A will interrupt the CPU and provide either a subroutine call instruction followed by an interrupt service routine address or an eight bit interrupt vector over the system bus to the CPU. Thus, in either case, the 8259A provides the CPU with information as to which interrupt service routine to execute, thereby ensuring that the CPU services the peripheral device which requested the interrupt in a suitable manner.

The 8259A may be configured to detect interrupt requests on its interrupt request inputs as either low-to-high voltage transitions or as high voltage levels. In other words, the 8259A interrupt request inputs can be configured as either edge- triggered or level-triggered. Many peripheral devices have been designed to produce edge-triggered interrupt request signals in the form of low-to-high voltage transitions. Specifically, an edge-triggered interrupt request is a transition from a recognizably low voltage to a recognizably high voltage within a predetermined time limit. However, peripheral devices which request service by means of high voltage levels are becoming more common. It is desirable for an interrupt controller to be able to detect level-triggered interrupts to allow for the use of peripheral devices which produce level-triggered interrupt requests, thereby providing for greater flexibility in interface design. It is desirable for a computer system including an interrupt controller to be flexible enough to accommodate the newer peripheral devices producing level-triggered interrupt requests while remaining backward compatible with older peripheral devices which produce edge-triggered interrupt requests.

However, programmable interrupt controllers to date have had the drawback that all interrupt request inputs are configured in the same manner. Typically, a single edge/level configuration control bit is used to program all interrupt request inputs to be either edge-triggered or level-triggered. This drawback has resulted in the disadvantage that upgrading a system to include peripheral devices producing level-triggered interrupt requests has required that all peripheral devices be so updated. It is not practicable to employ a mix of level-triggered peripheral devices and older edge-triggered peripheral devices. Decreased flexibility and increased user costs have resulted.

EP-A-0 358 330, which is cited as prior art in accordance with Article 54(3) of the European Patent Convention, describes an interrupt controller, for a computer system having a central processing unit (CPU), the controller comprising: a plurality of inputs connected to receive interrupt requests from a plurality of peripheral devices; means (66) for sending an interrupt signal to the CPU over an interrupt request output in response to any one of the interrupt requests; a priority resolver for assigning to each input in the plurality of inputs a priority position to create a hierarchy for the purpose of resolving which interrupt request is first serviced when time overlapping interrupt requests are received; and, means for independently establishing each input to be responsive to either edge-triggered or level-triggered interrupt requests; the means for establishing comprising a first initialization command register having a plurality of bits, each bit respectively corresponding to one of the inputs, and wherein each input is established to be responsive to edge-triggered interrupt requests when the respective bit is in a first state and each input is established to be responsive to level-triggered interrupt requests when the respective bit is in a second state.

An aim of the present invention is to provide a programmable interrupt controller which detects edge-triggered and level-triggered interrupt requests from peripheral devices on a per peripheral device basis.

In accordance with the present invention there is now provided an interrupt controller, for a computer system having a central processing unit (CPU), the controller comprising: a plurality of inputs connected to receive interrupt requests from a plurality of peripheral devices; means for sending an interrupt signal to the CPU over an interrupt request output in response to any one of the interrupt requests; a priority resolver for assigning to each input in the plurality of inputs a priority position to create a hierarchy for the purpose of resolving which interrupt request is first serviced when time overlapping interrupt requests are received; and, means for independently establishing each input to be responsive to either edge-triggered or level-triggered interrupt requests; the means for establishing comprising a first initialization command register having a plurality of bits, each bit respectively corresponding to one of the inputs, and wherein each input is established to be responsive to edge-triggered interrupt requests when the respective bit is in a first state and each input is established to be responsive to level-triggered interrupt requests when the respective bit is in a second state; the interrupt controller being characterised in that the means for establishing comprises an interrupt request register having a plurality of stages, a respective one of the stages corresponding to each bit and each interrupt request input, each of the stages comprising: an edge detector comprising an edge detector latch having a data input connector to the respective interrupt request input and a data output and operative when the respective bit of the first initialization command register is programmed to the first state for receiving an edge-sensitive interrupt request and latching the request to a level converter latch connected to receive and latch an interrupt request as a level, a metastability latch connected to receive a level-triggered interrupt request when the respective bit is programmed to the second state and connected to receive the interrupt request held as a level by the level converter latch when the respective bit is programmed to the first state, and an interrupt request register latch connected to receive and hold the interrupt request held by the metastability latch.

This advantageously provides flexibility in designing and implementing computer systems in that peripheral devices utilizing either edge-triggered or level-triggered interrupt requests may be used on the various interrupt request inputs. Also, such peripheral devices are interchangeable. Replacing an edge-triggered peripheral device with a level-triggered peripheral device merely requires changing the programming configuration of the interrupt controller. Thus, a computer system may be upgraded with new level-triggered peripheral devices without incurring undesirably high costs for replacing otherwise functional peripheral devices.

Viewing the present invention from a second aspect, there is now provided a method for receiving and servicing an edge-triggered interrupt request from a first source and a level-triggered interrupt request from a second source comprising the steps of programming an interrupt controller having first and second interrupt request inputs to detect edge-triggered interrupt requests incoming over the first interrupt request input and to detect level-triggered interrupt requests incoming over the second interrupt request input, said programming being done on a per input basis, detecting and latching an edge-triggered interrupt request incoming over the first input, interrupting the CPU to cause the CPU to service the edge-triggered interrupt request, detecting a level-triggered interrupt request incoming over the second input, interrupting the CPU to cause the CPU to service the level-triggered interrupt request, loading the latched edge-triggered interrupt request into a first bit of an interrupt request register corresponding to the first interrupt request input, and loading the level-triggered interrupt request into a second bit of the interrupt request register corresponding to the second interrupt request input.

This advantageously provides programming flexibility and convenience in computer system design and also facilitates system upgrades generally as described in conjunction with the interrupt controller.

Viewing the present invention from a third aspect, there is now provided a computer system comprising: a central processing unit (CPU) having a program including a plurality of interrupt service routines; a group of peripheral devices including at least first and second peripheral devices having edge-triggered and level-triggered interrupt requests, respectively; a bus connected to the CPU; an interrupt controller according to the invention connected between the group of peripheral devices and the bus for interrupting the CPU responsive to the edge-triggered and level-triggered interrupt requests from the group of peripherals and causing the CPU to execute the interrupt service routines, thereby servicing the interrupt requests.

In an example of the present invention, there is provided an interrupt controller for a computer system which allows for the peripheral devices in the group to be replaced or upgraded in a manner which may include changing the mix of edge-triggered and level-triggered interrupt requests while preserving the system's ability to service the peripheral devices. The interrupt controller is capable of servicing interrupt requests from any particular mix of peripheral devices having edge- triggered and level-triggered interrupt requests without regard to the address location of each device. In other words, each peripheral can have either edge-triggered or level-triggered interrupt requests, and the interrupt controller accommodates edge-triggered and level-triggered interrupts on a per interrupt line basis.

In a preferred example of the present invention to be described later, there is provided a computer system having a programmable interrupt controller which may be programmed in accordance with currently existing software written for previously existing programmable interrupt controllers. If the controller is so programmed, all inputs shall detect either edge- triggered interrupt requests or level-triggered interrupt requests so that a controller in accordance with the invention operates in a manner consistent with such previously existing programmable interrupt controllers. Thus, the controller is backward compatible with existing computer systems. The programmable interrupt controller of the present invention thus provides a method for receiving and servicing edge-triggered and level-triggered interrupts.

An embodiment of the present invention will now be described, by way of example only, with reference to the accompanying drawings in which:

Figure 1 is a block diagram of a computer system utilizing an interrupt controller in accordance with the invention for servicing peripheral devices.

Figure 2 is a block diagram of an interrupt controller in accordance with the invention.

Figure 3 is a logic diagram showing a hardware configuration of initialization control word registers utilized in a preferred embodiment of the invention.

Figures 4-6 are detailed logic diagrams of various initialization control word registers shown in Figure 3.

Figure 7 is a detailed logic diagram showing a stage of the interrupt request register (IRR) shown in Figure 2.

Figures 8A and 8B are first and second embodiments, respectively, of the edge detector shown in Figure 7.

Figures 9A-9E are tables showing how the initialization control word registers of the preferred embodiment of the programmable interrupt controller may be programmed for various system configurations.

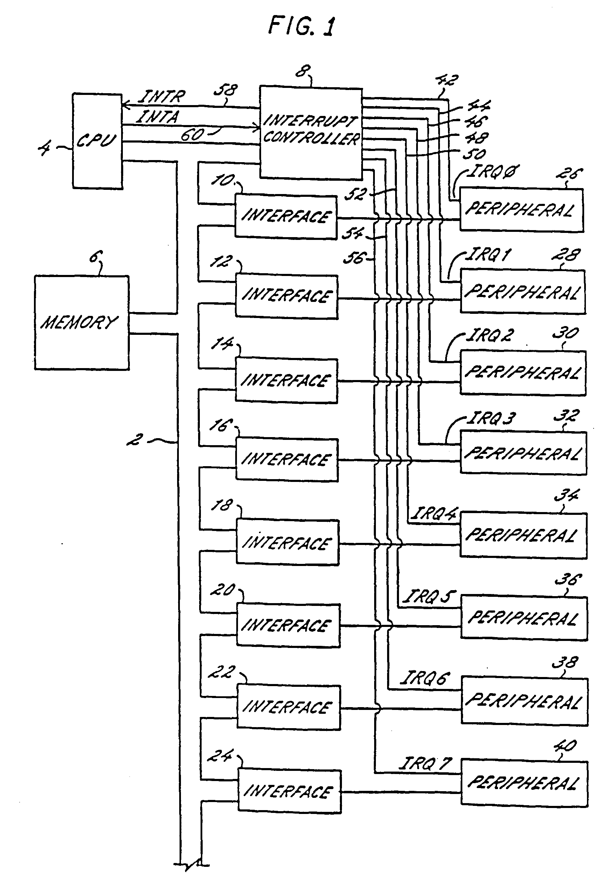

Referring to Figure 1, there is depicted a computer system employing an interrupt controller in accordance with the invention. A computer system bus 2 is connected to a central processing unit (CPU) 4, memory 6, an interrupt controller 8 , and a plurality of interfaces 10-24. The interfaces 10-24 may be any type of suitable shared boundary and may include electronic interface devices, such as universal asynchronous receivers/transmitters (UARTS) and suitable connectors. The interfaces 10-24 are connected to peripheral devices 26-40 which may be sensing or monitoring devices, such as thermocouples or voltage sensors, or control devices, such as motors, electronic switches, or other devices, suitable for computer controlled applications. The peripheral devices 26-40 have interrupt request outputs which are connected via lines 42-56 to interrupt request inputs on the interrupt controller 8. The interrupt controller 8 includes an interrupt request output connected via a line 58 to an interrupt request input on the CPU 4. An interrupt acknowledge line 60 is connected to carry an interrupt acknowledge signal from the CPU 4 back to the interrupt controller 8. Typically, the lines 58, 60 are treated as part of a system bus including data, address, and control lines. For the purpose of illustration, however, Figure 1 shows the interrupt request line 58 and the interrupt acknowledge line 60 running between the interrupt controller 8 and the CPU 4 as separate lines.

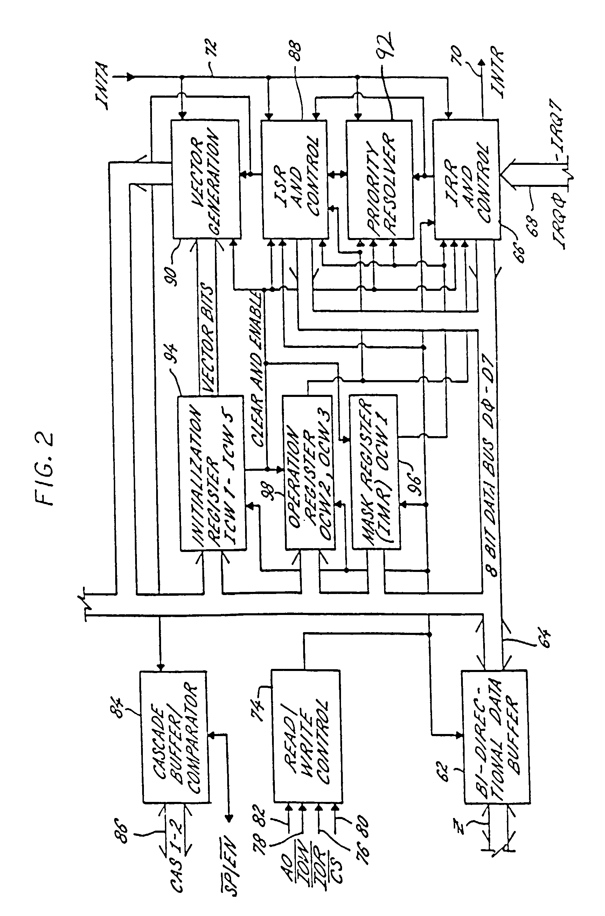

Figure 2 shows a more detailed diagram of the interrupt controller 8. A data bus buffer 62 provides an interface between the system data bus 2 (Figure 1) and an internal data bus 64. An interrupt request register (IRR) 66 is connected to the data bus 64 and has eight interrupt request inputs collectively shown as 68. The interrupt request inputs 68 are individually designated IRQ₀-IRQ₇ The IRR 66 has an interrupt request output INTR 70 which is connected to the line 58 shown in Figure 1. In addition, the embodiment depicted in Figure 2 includes an interrupt acknowledge input INTA 72 connected to the interrupt acknowledge line 60 from the CPU 4. To permit the CPU 4 to select the interrupt controller 8 and write to and read from the controller 8, a read/write control module 74 is provided having read and write inputs (IOR, IOW) 76, 78, a chip select input (CS) 80, and an address select input (AO) 82. To permit a plurality of interrupt controllers to be cascaded in a single computer system, a cascade control 84 is provided having a three bit cascade bus (CAS) 86 which is an output when the controller is used as a master and an input when the controller is used as a slave.

Also shown in Figure 2 is an interrupt service register (ISR) 88. The ISR 88 stores a bit corresponding to each interrupt request input 68. Bits in the ISR 88 are set to indicate which interrupt levels are being serviced. The IRR 66 generates an interrupt request which is delivered to the CPU 4 over the interrupt request line 70. An acknowledgement from the CPU 4 is received over the interrupt acknowledge line 72 by the IRR 66, the ISR 88, a vector generator 90, and a priority resolver 92, all of conventional design.

The interrupt controller 8 also includes a series of initialization command word (ICW) registers, collectively shown as 94, which are written into by the CPU 4 through the data bus buffer 62 and the internal data bus 64 upon initialization. In a conventional manner, the ICW registers 94 provide vector bits to the vector generator 90 which, in turn, presents a suitable interrupt vector or service routine address onto the internal data bus 64. The priority resolver 92 assigns each of the interrupt request inputs (IRQ₀-IRQ₇) 68 a priority position with respect to the other inputs 68 to create a hierarchy for resolving which interrupt request is serviced first when simultaneous or time overlapping interrupt requests are received by the IRR 66. Any suitable priority scheme may be used. As a first example, priority may be fixed in a given order. As a second example, priority may rotate, i.e., an input may go to the bottom of the priority hierarchy after it has been serviced. Finally, operation command word (OCW) registers OCW1, OCW2, and OCW3 cause the interrupt controller 8 to operate in various modes in a well known manner. OCW1 is stored in a mask register 96. The bits of the OCW1 register serve to mask selected ones of the IRQ inputs 68. OCW2 and OCW3 are stored in an operation register 98 and provide other operational modes.

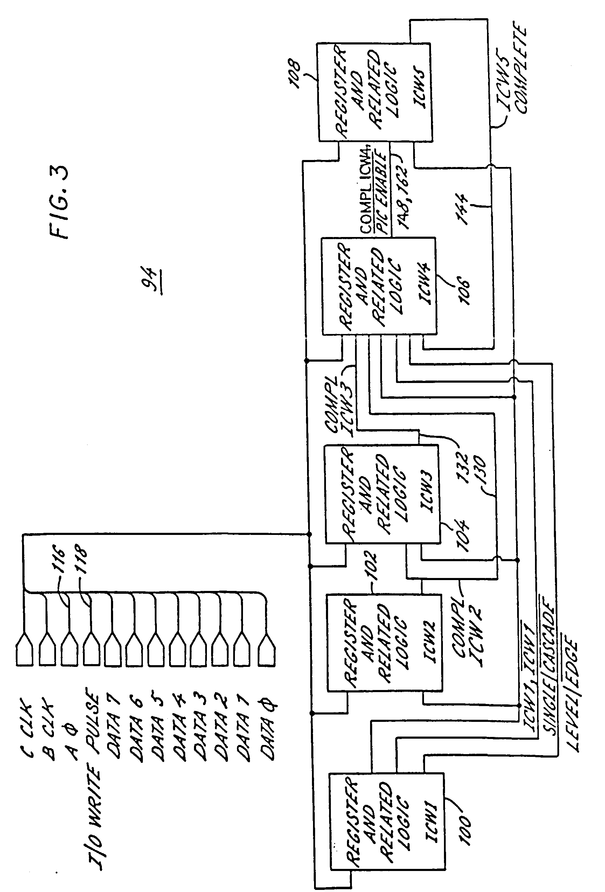

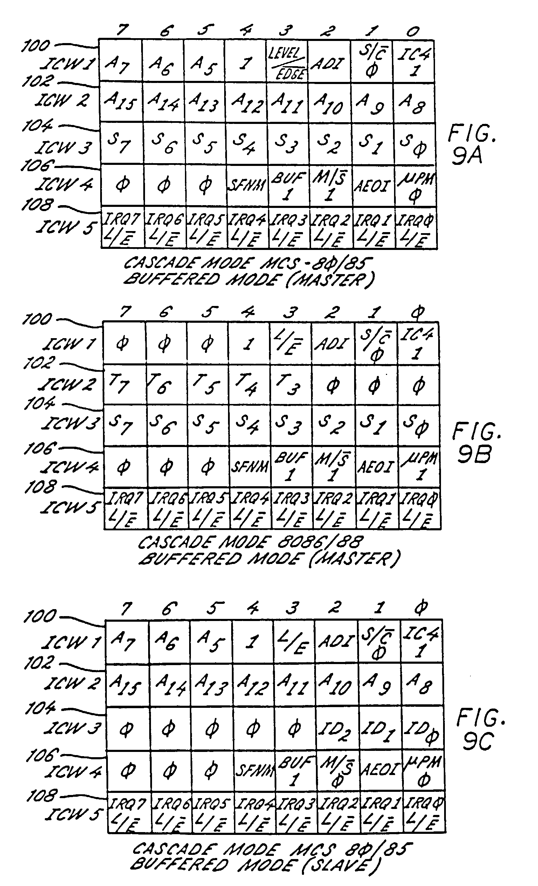

The ICW registers 94 are depicted in more detail in Figure 3. The registers include ICW1 (shown as 100), ICW2 (shown as 102), ICW3 (shown as 104), ICW4 (shown as 106, and ICW5 (shown as 108). In Figure 3, the ICW registers 94 are shown in block diagram along with certain interconnections. Still more detailed drawings, including additional logic used to interconnect the registers, are provided and discussed below. While the following discussion illustrates a preferred embodiment in terms of various functions controlled by bits in these registers, it is to be understood that an interrupt controller in accordance with the invention may include varying numbers of registers and may make bit assignments for functions, such as those described below, in arrangements different from the present embodiment. Also, individual bits may be defined differently as long as the overall device functions in a manner consistent with the invention. The ICW registers 94 are programmed during initialization by the CPU 4 which writes values into the registers to set bits so as to configure the interrupt controller 8 in a desired fashion. Examples of ICW programming for various configurations are shown in Figures 9A-9E and the related text. In the present embodiment, the ICW registers 94 are written into in sequence. Alternatively, the ICW registers 94 could be separately addressable for reading and writing in any desired sequence. Each register produces a signal indicating that it has been written into. In Figure 3, these signals are indicated as ICW1/ICW1, COMPL ICW2, COMPL ICW3, COMPL ICW4 AND ICW5 COMPLETE. These signals are used to enable writing into the subsequent registers. While all of the ICW 94 registers are used for completely configuring the interrupt controller 8, certain registers contain bits which are particularly relevant to the disclosed embodiment. These registers are described in more detail below.

Figure 3 may be taken as a summary of the more detailed subject matter appearing below. The architecture of the preferred embodiment as depicted in Figure 3 is similar in many respects to the Intel 8259A programmable interrupt controller referred to above. In particular, the ICW1, ICW2, ICW3, and ICW4 registers 100, 102, 104, 106 are substantially similar to comparable registers in the 8259A. Points of distinction between these registers as used in the 8259A and in the present preferred embodiment are noted below.

Since an objective of the present invention is to provide a programmable interrupt controller in which a plurality of interrupt request inputs may be programmed to be either edge-sensitive or level-sensitive on a per interrupt basis, the ICW5 register 108 includes a bit corresponding to each interrupt request input. Each bit may be programmed in one of two states, the two states corresponding respectively to edge-sensitivity and level-sensitivity. Thus, in accordance with the invention, a user may program an interrupt controller as depicted in Figure 3 to provide the desired per interrupt selectability of edge-triggering or level-triggering.

With this in mind, it will be seen that a programmable interrupt controller in accordance with the invention need not follow this exact architecture. Different types of interrupt controllers will have different types of programming characteristics. It may be that configuration parameters in other interrupt controllers may be programmed in a manner other than through the use of control registers. Also, similar configuration parameters may be defined in terms of different programmable bits from those described below in conjunction with the initialization control registers. However, in any such programmable interrupt controller according to the present invention, a plurality of interrupt request inputs may be programmed on a per interrupt basis for edge-sensitivity or level-sensitivity, either through the use of a register such as the ICW5 register 108 or through other suitable means.

As will be described below, backward compatibility with the Intel 8259A is provided by using a LEVEL/EDGE bit. While the 8259A uses this single bit to program all interrupt request inputs to be either edge-sensitive or level-sensitive, the present preferred embodiment uses this same bit to select either edge-sensitivity for all interrupt request inputs or selectability on a per interrupt basis through the use of the bits in the ICW5 register 108. This use of the LEVEL/EDGE bit in this manner is an additional novel feature of the present invention. While it is defined in the present preferred embodiment to provide backward compatibility with the Intel 8259A, other programmable interrupt controllers might provide backward compatibility with previously existing interrupt controllers in an essentially analogous manner by adapting the definition of their own configuration parameters in a suitable fashion.

In addition, Figure 3 shows various system signals which are provided to all of the initialization command word registers. These signals are all essentially conventional in nature. They are standard computer system data, address, and control bus signais. For instance, the lines DATA0-DATA7 are data bus lines. They are individual lines which together make up the eight bit data bus 64 shown in Figure 2. The line A0 is the least significant bit of a conventional address bus. Many large scale integrated circuits, such as interface devices and interrupt controllers, may be programmed through the use of memory-mapped input/output. This is a conventional programming technique in which one or more memory addresses are used to program a peripheral device, such as an interface device or an interrupt controller. Where one or more address inputs are designed into the device, system address bus lines may be connected in hardware to these inputs to provide addressability through software programming. Finally, the signals I/O WRITE PULSE, CCLK, and BCLK are conventional control signals. In particular, the present preferred embodiment utilizes two separate clock signal CCLK and BCLK. Typically, a plurality of clock signals may be used if they have a given phase relationship between each other. In other conventional systems, a single clock may be used.

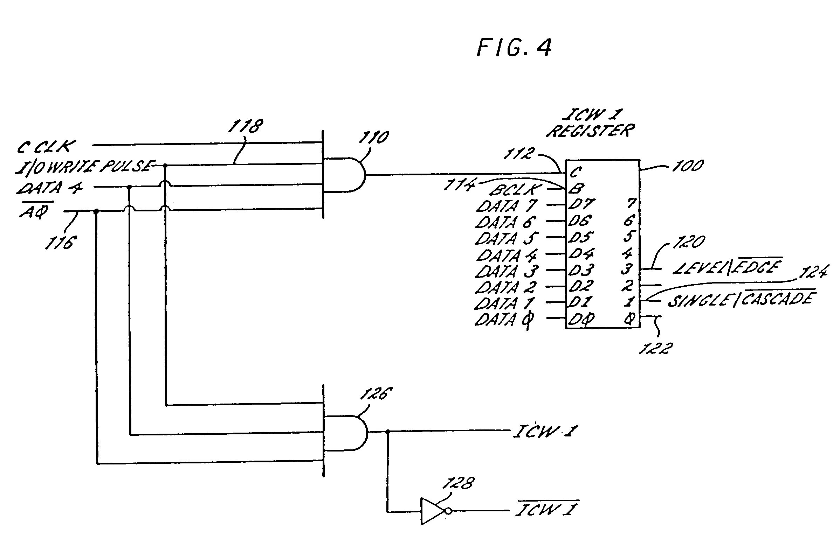

Turning to Figure 4, a more detailed drawing is provided showing the ICW1 register 100 and logic utilized for writing into it. Writing into the ICW1 register 100 is facilitated by means of the system clocks BCLK and CCLK. An AND gate 110 is provided for enabling the system CCLK to reach a C input 112 of the ICW1 register 100 under suitable conditions. A B input 114 of the ICW1 register 100 is connected directly to the system BCLK. To permit the CPU to address individual registers within the interrupt controller 8, an address line 116 must be high as well as an I/O WRITE PULSE 118. When a data line DATA4 of the data bus 64 is high, the command is interpreted as being directed to the ICW1 register 100. Accordingly, DATA4 is also connected to the AND gate 110.

Data bits on the data bus 64 are written into the ICW1 register 100 in a conventional fashion to provide various defined signals representing a desired configuration of the interrupt controller. In accordance with the preferred embodiment of the invention, the Bit 3 of the ICW1 register is the LEVEL/EDGE bit 120. In the 8259A interrupt controller, a corresponding bit defines whether all of the interrupt request inputs were level-sensitive or edge-sensitive. In the present embodiment of the invention, the function of the LEVEL/EDGE bit 120 has been modified to provide backward compatibility with the 8259A as well as selectability on a per interrupt basis in accordance with the invention. When the LEVEL/EDGE bit 120 is low, all interrupt request inputs are edge-sensitive. When the LEVEL/EDGE bit 120 is high, interrupt request inputs are programmable on a per interrupt basis to be either edge-sensitive or level-sensitive. Exactly how each interrupt request input is programmed for detecting interrupt requests in described below in conjunction with the ICW5 register 108. Defining bit 3 of the ICW1 register 100 in this manner is a practical manner for implementing the invention while also providing backward compatibility. Since many older systems employing the 8259A use peripheral devices producing edge-triggered interrupt requests, system software for configuring the 8259A would typically program bit 3 of the ICW1 register 100 to be low for edge-triggering. Thus, an interrupt controller in accordance with the invention programming this bit to be low would operate in the same manner as an 8259A. On the other hand, newer systems employing newer level-triggered peripheral devices and an interrupt controller in accordance with the invention could easily program the LEVEL/EDGE bit 120 high, thereby providing interrupt selectability on a per interrupt basis.

For implementing an interrupt controller in accordance with the invention having backward compatibility, the implementation as described above is deemed to be the best mode for carrying out the invention. However, it will be understood that other ways of implementing edge-triggered and level-triggered interrupts are within the scope of the invention may be used. For instance, the LEVEL/EDGE bit 120 could be implemented such that the high value would configure all interrupt request inputs to be level-sensitive and a low value would permit per input selectability. Alternatively, the LEVEL/EDGE bit 120 could be ignored and each interrupt request input would always be configured in accordance with a corresponding bit in ICW5 as described below. Also, the state of the LEVEL/EDGE bit 120 could be reversed, i.e., a high state could correspond with edge-sensitive interrupt requests. Then it would be an EDGE/LEVEL bit.

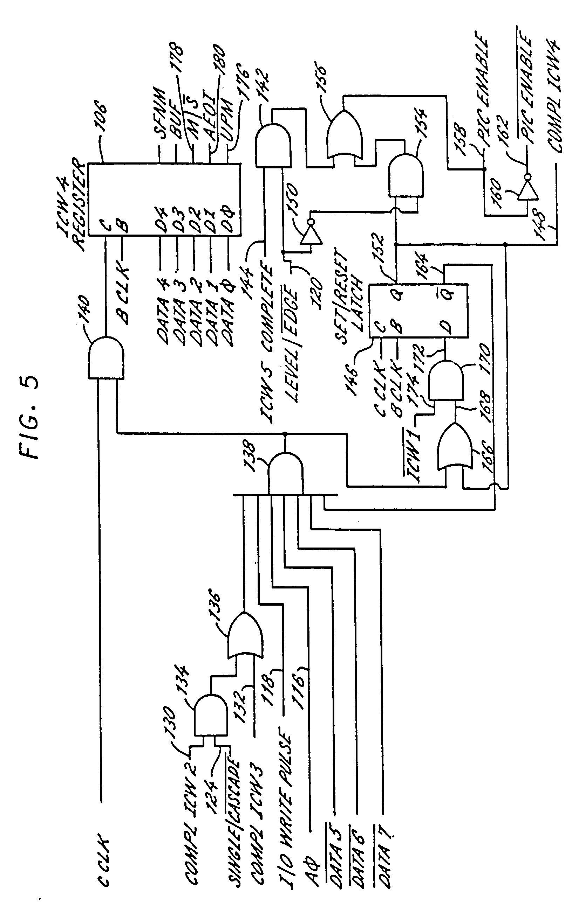

Bit O of the ICW1 register is an IC4 bit 122 When this bit is a 1, the ICW4 register 106 is programmed and its bits define interrupt controller parameters as discussed in conjunction with Figure 5 and tabulated in Figures 9A-9E. Of the IC4 bit 122 is 0, then the ICW4 register 106 is not programmed and the parameters are set to default values as described in conjunction with Figure 9E which illustrates a case in which the IC4 bit 122 is low.

Figure 4 also shows bit 1 of the ICW1 register 100 which is a SINGLE/CASCADE bit 124. This bit is utilized in a conventional manner when a plurality of interrupt controllers are used in a system. A master interrupt controller can be used with up to eight slave controllers, thereby permitting up to sixty-four interrupt request inputs at up to sixty-four priority levels to be handled. As shown in Figure 2 and described earlier, the cascade control 84 has a three-bit cascade bus 86. If the cascade mode is selected by programming the SINGLE/CASCADE bit 124 low and the controller is configured as a master (as will be described later in conjunction with the ICW4 register 106), then the three lines making up the cascade bus 86 are outputs which are used to select one of up to eight slave controllers.

Also shown in Figure 4 are an AND gate 126 and an inverter 128 which produce high-true and low-true versions of a signal ICW1. The AND gate 126 has inputs connected to receive the system I/O WRITE PULSE 118 as well as the address line 116 and the DATA4, the fourth bit of the data bus 64. Accordingly, the AND gate 126 outputs the signal ICW1 as a pulse synchronized with the I/O WRITE PULSE 118 when the ICW1 register 100 is written into. This signal ICW1 is used for clearing the remaining ICW registers when the programming sequence, beginning with the ICW1 register 100, commences, thereby enabling programming of the other registers in sequence.

Referring now to Figure 5, there is disclosed the ICW4 register 106 and accompanying logic. As with the other registers, the ICW4 register 106 is clocked by means of the system BCLK and the system CCLK as enabled by an enabling logic network. Since, in accordance with the preferred embodiment, the ICW2 and/or ICW3 registers 102, 104 must be written as a prerequisite to writing the ICW4 register 106, the enabling logic network receives signals indicating the completion of writing into the registers 102, 104. The signals are called COMPL ICW2 and COMPL ICW3 and are shown in Figure 3 as 130 and 132, respectively. Because they are of conventional configuration, the ICW2 and ICW3 registers 102, 104 have not been disclosed in detail in the present specification. The network includes an AND gate 134 connected to receive as inputs a signal COMPL ICW2 (indicating that the ICW2 register 102 has been programmed) and the SINGLE/CASCADE bit 124 of the ICW1 register 100. An OR gate 136 is connected to receive as inputs the output of the AND gate 134 and a signal COMPL ICW3, indicating that the ICW3 register 104 has been programmed. As shown in Figure 13 and discussed hereinafter, in the single mode, the ICW3 register 104 is not programmed. Thus, programming the ICW4 register 106 may be enabled either by the completion of programming of the ICW3 register 104 or, in the single mode, by that of the ICW2 register 102.

The output of the OR gate 136 is connected to an input of an AND gate 138. The AND gate 138 produces an output which enables the system CCLK through an AND gate 140 to the ICW4 register 106 when all necessary prerequisites are met. An output from the OR gate 136 is one prerequisite. In addition, the I/O WRITE PULSE 118 and the address line AO 116 are prerequisites for enabling the CCLK to the ICW4 register 106. Finally, bits 5, 6, and 7 of the data bus 64, which are not used in the ICW4 register 106, must be low. These three data bits are shown as inverted in a conventional manner to accommodate the active high inputs of the AND gate 138.

Circuitry is also provided in Figure 5 for enabling the programmable interrupt controller 8 upon completion of programming of all of the ICW registers. The controller 8 is enabled when the ICW5 register 108 has been programmed if the LEVEL/EDGE bit 120 is high. As will be shown below, the ICW5 register 108 is programmed to select edge-triggering or level-triggering on a per interrupt basis. If the LEVEL/EDGE bit 120 has been programmed low, all interrupt request inputs default to edge-sensitivity. Accordingly, an AND gate 142 is provided to enable the programmable interrupt controller 8 when the LEVEL/EDGE bit 120 is high and the ICW5 register 108 has been programmed, as indicated by an ICW5 COMPLETE signal 144.

A set/reset latch 146 is provided to indicate that the ICW4 register 106 has been written into by producing a signal COMPL ICW4, shown as 148. The output of the latch 146 is also used to indicate that programming of the interrupt controller 8 is completed. Where the LEVEL/EDGE bit 120 is low, indicating that the interrupt controller 8 defaults to a situation where all inputs are edge-sensitive, there is no need to program the ICW5 register 108. Accordingly, the interrupt controller 8 is ready to be enabled after the ICW4 register 106 has been programmed.

The LEVEL/EDGE bit 120 is inverted by an inverter 150 to indicate edge-triggering when high. A high true output 152 of the latch 146 is connected along with the inverted LEVEL/EDGE bit 120 to an AND gate 154. Outputs of the AND gates 142 and 154 are connected to inputs of an OR gate 156. The output of the OR gate 156 is a PIC ENABLE signal 158 which, when high, indicates that the programmable interrupt controller 8 is enabled. PIC ENABLE 158 is inverted by an inverter 160 to produce a PICENABLE signal 162 which is used where an active low signal indicating that the programmable interrupt controller is enabled is required.

The latch 146 is clocked by the system CCLK and BCLK. When the CPU 4 begins to program the ICW registers, a low value is clocked into the latch 146. Thus, a low-true output 164 of the latch 146 will be high, enabling the AND gate 138 which receives the ICW4 decoding signals. When ICW4 is written and the AND gate 138 goes high, an OR gate 166 goes high, raising a first input 168 of an AND gate 170, the output of which is connected to a data input 172 of the latch 146. A second input 174 of the AND gate 170 is connected to ICW1. ICW1 is normally high and goes low only at the time when the ICW1 register 100 is written into, thereby initiating the programming of the ICW registers. Accordingly, at the moment when the ICW1 signal goes low, a low value is clocked into the latch 146. The low-true output 164 of the latch 146 is high, enabling the AND gate 138. The high-true output 152 of the latch 146 goes low, so the OR gate 166 remains low until the output of the AND gate 138 goes high. The latch 146 is finally set at the time when the ICW4 register 106 is written since the output of the AND gate 138 goes high, enabling the CCLK through the AND gate 140 to the C input of the ICW4 register 106 and also raising the output of the OR gate 166, thereby raising the output of the AND gate 170 connected to the data input 172 of the latch 146. Thus, when the LEVEL/EDGE bit 120 is low, the PIC ENABLE signal 158 goes high at the time when the latch 146 is set as the ICW4 register 106 is being written into.

Also shown in Figure 5 are various bits of the ICW4 register 106 indicating various aspects of the configuration of the interrupt controller 8. Generally speaking, these signals are defined in a manner consistent with the Intel 8259A. They are programmed by writing into the ICW4 register 106 with suitable values on the respective bits of the data bus 64. Of particular interest with respect to the disclosed embodiment are the following bits. A microprocessor mode (uPM) bit 176 is set according to which type of microprocessor the interrupt controller is working with. If the uPM bit 176 is low, the interrupter controller 8 will operate in accordance with an 8080 or 8085 microprocessor by providing a sixteen bit interrupt service routine address. If the uPM bit 176 is high, the interrupt controller 8 will operate in accordance with an 8086 microprocessor by providing an eight bit interrupt vector. A MASTER/SLAVE (M/S) bit 178 defines whether the interrupt controller 8 is a master or slave. This bit is used in the cascade mode in which interrupt request outputs of slave controllers are connected to interrupt request inputs of a master controller.

An automatic end of interrupt (AEOI) bit 180 may be programmed high to cause the programmable interrupt controller 8 to automatically perform a non-specific end of interrupt operation following the last interrupt acknowledge pulse received over the interrupt acknowledge line 72. The AEOI bit 180 may be used in a conventional manner in conjunction with rotating interrupt request priority. Rotate in automatic end of interrupt mode may be used.

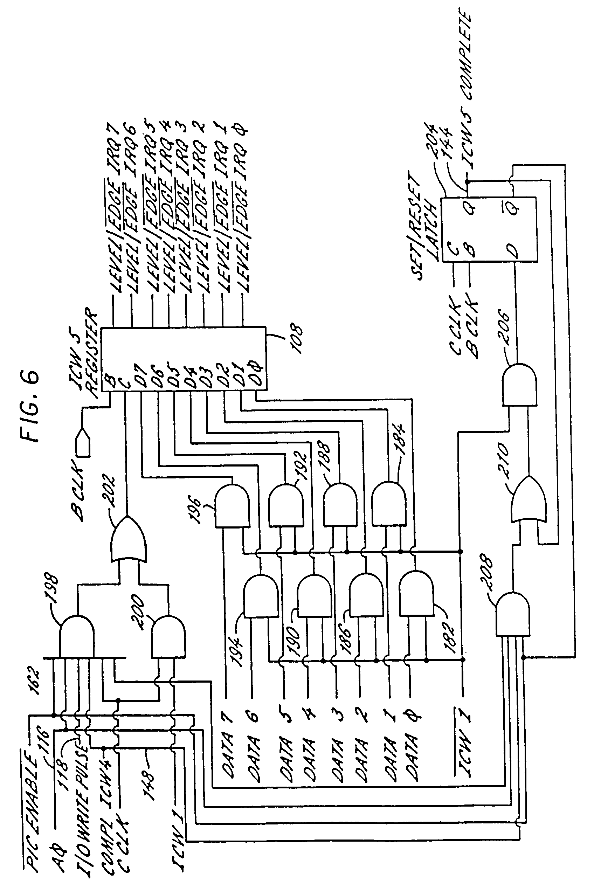

Referring now to Figure 6, the ICW5 register 108 is shown. The ICW5 register 108 has eight data inputs, one corresponding to each interrupt request input. The data bus 64 is enabled through AND gates 182, 184, 186, 188, 190, 192, 194, 196, to each input of the ICW5 register 108. When the register 108 is written into, the bits on the data bus 64 are loaded into the register 108 to drive output signals LEVEL/EDGE IRQ₀-LEVEL/EDGE IRQ₇, thereby establishing on a per interrupt basis whether each input is level-sensitive or edge-sensitive.

Also shown in Figure 6 is a logic network for enabling the system CCLK to the ICW5 register 108. PICENABLE 162 should be high, indicating that programming of the ICW registers 94 is in progress but not complete. COMPL ICW4 148 should be high, indicating that the ICW4 register 106 has been already written into. The circuitry shown includes an AND gate 198 for enabling the system CCLK through to the C input of the ICW5 register 108. The AND gate 198 receives the PICENABLE signal 162 and the COMPL ICW4 signal, as well as the address line AO 116 and the I/O WRITE PULSE 118.

Another AND gate 200 is connected to receive the system CCLK and the high-true ICW1 signal. Outputs of the AND gates 198, 200 are connected to inputs of an OR gate 202 having an output connected to the C input of the ICW5 register 108. The AND gate 200 is provided so that the ICW5 register 108 will be written into at the time that the ICW1 register 100 is written into. At that time, the AND gates 182, 184, 186, 188, 190, 192, 194, 196 are disabled by their respective inputs connected to the ICW1 signal, which is low. Since this signal is inactive, the outputs of the AND gates 182-196 are all low to clear all bits of the ICW5 register 108 at the time when the ICW1 register 100 is written into. This is done so that, if the LEVEL/EDGE bit 120 is low, all of the ICW5 bits will be cleared, thereby indicating that all interrupt request inputs will be edge-sensitive. Each gate has two inputs, one connected to a data bus line of the internal data bus 64 and the other connected to the ICW1 signal. ICW1 is low only when the ICW1 register 100 is being written into. Thus, at that time all the inputs to the ICW5 register 108 will be low. Similarly, the CCLK enabling logic includes the AND gate 200 having inputs connected to the ICW1 signal and the system CCLK. Thus, one clock pulse will be enabled through to the C input of the ICW5 register 108 at the time when the ICW1 register 100 is written into. Accordingly, it can be assured that all ICW5 bits will be cleared when the ICW1 register 100 is written into. If the ICW5 register 108 is subsequently written into, its final values will be established at that time. If not, all of the interrupt request inputs will be configured for edge-triggering.

Also shown in Figure 6 is a set/reset latch 204 similar to the set/reset latch 146 shown in conjunction with the ICW4 register 106. The latch 204 is normally high but is cleared when the ICW1 register 100 is written into. This is done by means of an AND gate 206 having an output connected to the D input of the latch 204 and an input connected to ICW1. As stated above, ICW1 goes low when the ICW1 register 100 is written into. Thus, at that time a low value is clocked into the latch 204. The latch 204 is set when COMPL ICW4 148 goes high, indicating that the ICW4 register 106 has already been written into, and also when PICENABLE 162 is high, indicating that, although the ICW4 register 106 has been written into, the logic connected to the D input of the set/reset latch 146 in Figure 5 has not enabled the programmable interrupt controller 8 as yet. These signals are input to an AND gate 208, the output of which goes high when all of the conditions described above are met. The AND gate 208 has an output connected to a first input of an OR gate 210. A second input of the OR gate 210 is connected to the output of the latch 204. Thus, once the latch goes high, the output of the OR gate 210 remains high even if the output of the AND gate 208 goes low. Thus, high values continue to be clocked into the latch 204 until the programming sequence is restarted by programming the ICW1 register 100. ICW1 goes low, the output of the AND gate 206 goes low, and a low value is clocked into the latch 204. The output of the OR gate 210 and the ICW1 signal are connected to inputs of the AND gate 206.

The foregoing has been a description of the initialization command word registers which, in the present embodiment, are implemented the programmable interrupt controller 8 and shown as 94 in Figure 2.

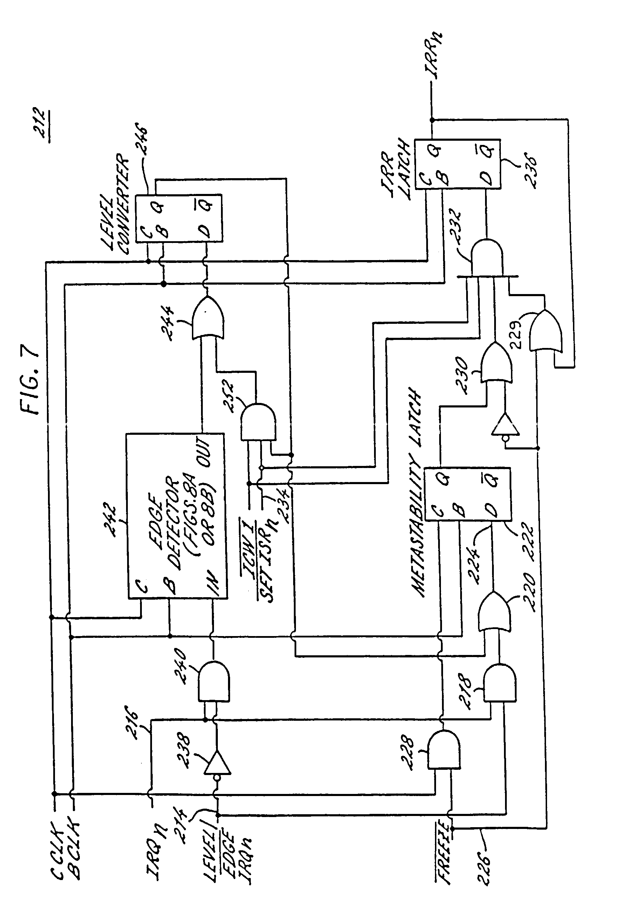

Figure 7 shows a detailed logic diagram of a portion of the interrupt request register (IRR) 66 shown in Figure 2. The IRR 66 is made up of eight stages, each stage corresponding with one interrupt request input. One typical stage 212 is depicted in Figure 7. It will be understood that the IRR 66 in its entirety includes eight stages, such as those depicted in Figure 7. It will also be understood that a programmable interrupt controller in accordance with the invention could include any suitable number of such stages.

In accordance with the invention, Figure 7 includes hardware designed to detect edge-triggered interrupt requests and also hardware to detect level-triggered interrupt requests. There is shown an input signal 214 called LEVEL/EDGE IRQₙ. This signal indicates whether an interrupt request input corresponding to the stage 212 is edge-triggered or level-triggered. The LEVEL/EDGE IRQₙ signal 214 could be any of the eight output signals of the ICW5 register 108 shown in Figure 6. Also, an input signal IRQₙ 216 is shown. This is an interrupt request input and could be any one of the interrupt request inputs 68 shown in Figure 2. Depending on the state of the LEVEL/EDGE IRQₙ signal 214, an appropriate portion of the hardware depicted in Figure 7 is used for detecting the interrupt request and latching it into the appropriate bit of the IRR 66.

In the case of level-triggered operation, the LEVEL/EDGE IRQₙ signal 214 is high, thereby enabling the interrupt request IRQₙ 216 through an AND gate 218 and an OR gate 220 to a metastability latch 222 at a data input 224. The metastability latch 222 is clocked by means of the system BCLK and the system CCLK as enabled by a FREEZE signal 226 through an AND gate 228. FREEZE 226 is normally high and goes low only during interrupt acknowledge cycles during which detection of a level-triggered interrupt request may be postponed.

The output of the metastability latch 222 passes through an OR gate 230 to an input of an AND gate 232. The remaining inputs of the AND gate 232 include the ICW1 signal which is high except during the programming sequence for the ICW registers 94, and SETISRn 234. This latter signal is a pulse which is normally high but goes low when a corresponding bit of the in service register (ISR) 88 shown in Figure 2 is set. Accordingly, the output of the metastability latch 222 passes through the AND gate 232 to a data input of an interrupt request register (IRR) latch 236. This latch 236 stores the interrupt request so that the interrupt controller 8 can utilize it to interrupt the CPU 4 and provide suitable information for the CPU 4 to determine which interrupt service routine to execute.

As stated above, if FREEZE is low, indicating an interrupt acknowledge at the time a level-triggered interrupt request appears, the interrupt request will not be latched into the metastability latch 222 until the end of the interrupt acknowledge.

During the time interval that an interrupt is being acknowledged, there will be either two or three pulses on the INTA line 72, depending on whether the interrupt controller 8 is configured for 8080/8085 systems or 8086 systems as per the uPM bit 176 of the ICW4 register 106. During the time the interrupt is being acknowledged, the IRR latch 236 is reset and the corresponding bit of the ISR 88 is set. When the ISR bit is set, the signal SETISRn 234 pulses low. Accordingly, the output of the AND gate 232 pulses low and a low value is clocked into the IRR latch 236. This is true notwithstanding the state of the metastability latch 222. During the interrupt acknowledge and after a suitable number of INTA pulses have taken place, the IRR bit is reset and the ISR bit is set. If the automatic end of interrupt (AEOI) mode is selected by programming the AEOI bit 180 of the ICW4 register high, the ISR bit is cleared at the end of the final INTA pulse. Otherwise, the ISR bit is cleared when an appropriate EOI command is issued by the interrupt service routine. At the end of the final INTA pulse, FREEZE goes high, the CCLK is passed to the C input of the metastability latch 222. In addition, the data input to the IRR latch 236 is enabled through the OR gate 229 and AND gate 232. Thus, the output of the metastability latch 222 is latched into the IRR latch 236.

In edge-triggered operation, the hardware in the lower portion of Figure 7, described previously, works essentially as described. However, the hardware in the upper portion of the drawing detects and latches an edge-triggered interrupt request and provides the latched interrupt request to an input of the OR gate 220. An edge-triggered interrupt request is enabled by LEVEL/EDGE IRQₙ signal 214 as inverted by an inverter 238 through an AND gate 240 to an input of an edge detector 242. The output of the edge detector 242 is connected through an OR gate 244 to an input of a level converter 246.

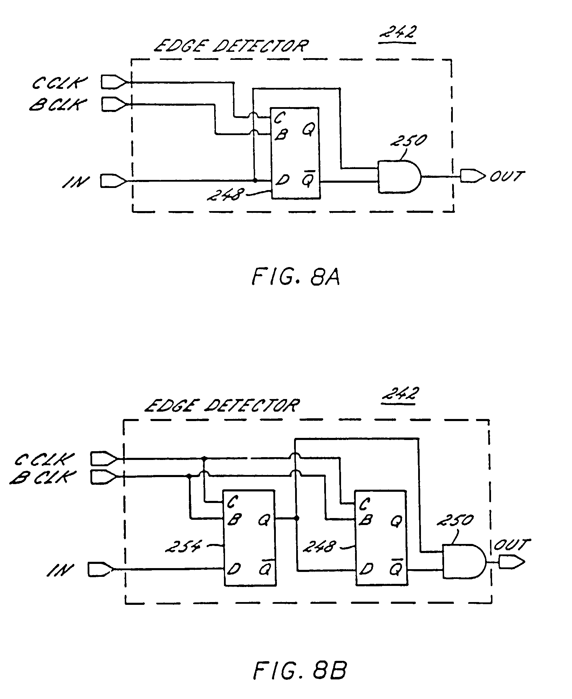

Figures 8A and 8B show two preferred embodiments of the edge detector 242 of Figure 7. Referring first to Figure 8A, there is shown a latch 248 and an AND gate 250 having inputs connected to the input and the low-true output of the latch 248. When an edge-triggered interrupt request is received, the IRQₙ signal 216 makes a transition from a low state to a high state. In order for a valid edge to be detected, the transition must take place within a specified time limit, such as one clock cycle. The system CCLK and BCLK continually run, latching the input signal into the latch 248. When a transition is made, for one clock cycle the previously existing low input will have been latched into the latch 248, driving the low-true output high while the input subsequent to the transition is also high. Both inputs of the AND gate 250 are high for that time interval. An output signal from the AND gate 250 is high for one clock cycle. This high signal is latched into the level converter 246. Referring briefly back to Figure 7, it will be seen that the high-true output of the level converter 246 is routed back to an input of an AND gate 252, the output of which is connected to an input of the OR gate 244. Thus, when the level converter 246 is latched high, it will remain high until SET ISRn goes low or ICW1 goes low, indicating that the initialization control words are being reprogrammed. This effectively latches the edge-triggered interrupt to a high state. The output of the level converter 246 is then connected to an input of the OR gate 220. From here on, the latched edge-triggered interrupt is treated as if it were a level-triggered interrupt as described previously.

Referring to Figure 8B, a second embodiment of the edge detector 242 is shown. This embodiment differs from that of Figure 8A in that a synchronizing latch 254 is connected ahead of the latch 248. The IRQₙ input is connected to a data input of the synchronizing latch 254, and an output of the synchronizing latch 254 is connected to an input of the edge detector latch 248 and to the AND gate 250. The latch 248 and the AND gate 250 work essentially the same way as those of the embodiment of Figure 8A. The difference is that the synchronizing latch 254 synchronizes the edge-triggered interrupt request in terms of the systems CCLK and BCLK. This provides greater reliability of operation and permits the timing characteristics of the synchronizing latch 254 to be determined in accordance with the timing characteristics of the edge-triggered interrupt request IRQₙ.

Figures 9A-9E are tables showing typical initialization command word programming sequences for various system configurations. In addition to the ICW1, ICW4, and ICW5 registers 100, 106, 108, the ICW2 and ICW3 registers 102, 104 are shown. In each case, the salient characteristics of the configuration are written out on the right, and bits which have certain required values for implementing those system configurations are identified along with the required values. Turning to Figure 9A, the programmable interrupt controller 8 is configured for the cascade mode. Thus, bit 1 of ICW1, SINGLE/CASCADE bit 124, is set to zero. The controller 8 is also configured for operation along with Intel 8080 or 8085 microprocessors. The uPM bit 176, bit 0 of ICW4, is zero. Also, the ICW2 register and the three most significant bits of the ICW1 register 100 are programmed with bits A15-A5 which provide the address of a page of memory having a table of interrupt service routine addresses. An address interval (ADI) bit, bit 2 of ICW1, may be is a one, indicating an interval of four bytes between interrupt service routine addresses, or a zero, indicating an interval of eight bytes between interrupt service routine addresses. In this latter case, bit 5 of the ICW1 register 100 is not used. Finally, since the interrupt controller 8 is set to the cascade mode and a master and one or more slave interrupt controllers are employed, this particular interrupt controller 8 is programmed to be the master. This is done by setting the buffered mode bit BUF, bit 3 of ICW4, to a one and setting the M/S bit 178, bit 2 of ICW4, to a one.

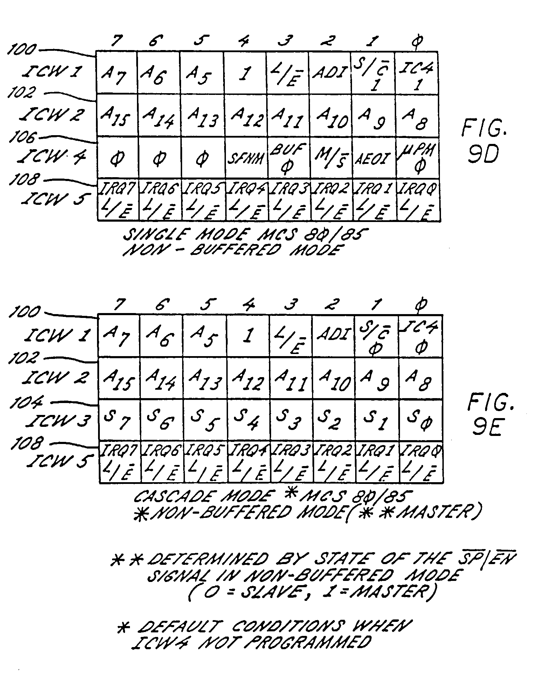

Turning to Figure 9B, there is shown a programming configuration identical to that of Figure 9A except that the programmable interrupt controller 8 is configured for use with 8086 and 8088 microprocessors. The difference is that bit 0 of ICW4, the uPM bit 176, is a one. In place of the interrupt routine address bits in the ICW2 and ICW1 registers 102, 100 shown in Figure 9A, in Figure 11 bits 3-7 of the ICW2 register 102 contain the five most significant bits of an interrupt vector supplied to the CPU 4. The three least significant bits, which make up the remainder of the interrupt vector, are determined by which interrupt request line IRQₙ 216 is active.

Turning to Figure 9C, there is shown a programming configuration identical to that of Figure 9A except that the interrupt controller 8 is configured to be a slave. This is done simply by setting the M/S bit 178, bit 2 of ICW4, to zero.

Turning to Figure 9D, there is shown a configuration similar that of Figure 9A except that instead the cascade mode, the interrupt controller 8 is configured to the single mode. This is done by setting the SINGLE/CASCADE bit 124, bit 1 of ICW1, to a one. Similarly, the buffered mode bit, bit 3 of ICW4, is set to zero because the buffered mode is not applicable here. Also, the value of the M/S bit 178 is irrelevant. It should be noted that the ICW3 register 104 has been omitted from the programming sequence shown in Figure 9D. ICW3 contains information which is only pertinent when both a master and one or more slave interrupt controllers are present. In the case of a master controller, as shown in Figure 9A, the ICW3 register 104 contains eight bits S7-S0 which are set to indicate whether each of the corresponding interrupt request inputs has a slave controller attached to it. In the case of a slave, as shown in Figure 9C, only bits 2-0 of the ICW3 register 104 are used. These three bits provide a slave ID the value of which corresponds to the interrupt request input of the master interrupt controller to which the slave device is connected. Again, since the notion of master and slave are irrelevant if a single interrupt controller is employed, the ICW3 register 104 is omitted in the single mode.

Turning finally to Figure 9E, there is shown a programming configuration in which the ICW4 register 106 is omitted. Whether ICW4 is programmed is determined by the IC4 bit, bit 0 of ICW1. In Figures 9A-9D, this bit has always been set high. In Figure 9E, however, this bit is zero. Accordingly, the ICW4 register 106 is omitted and certain default values are established for bits appearing in the ICW4 register 106. First of all, the system is configured as though bit 0 of ICW4 were set to zero, indicating 8080/8085 microprocessor. Second, the system is configured as though the buffer bit, bit 3 of ICW4, were zero, i.e., the system is configured for a non-buffered mode. When the interrupt controller 8 is configured to non-buffered mode, the hardware signal SP/EN is treated as an input and its state determines whether the interrupt controller is configured as a master of a slave. In the case of Figure 9E, it is assumed that the signal is high. Based on this assumption, the interrupt controller configures itself as a master.

In summary, there is provided, in accordance with the invention, a programmable interrupt controller having a plurality of interrupt request inputs capable of detecting either edge-triggered or level-triggered interrupt requests from peripheral devices. As shown in the illustrated embodiment, the ICW5 register 108 has a bit corresponding with each interrupt request input. The bits may be programmed to one of two states respectively corresponding to edge-triggering or level-triggering. The bits are programmable on a per bit basis. Accordingly, the interrupt request inputs of the interrupt controller may be programmed on a per interrupt basis for either level-sensitivity or edge-sensitivity. Because the interrupt request inputs may be programmed for edge-sensitivity or level-sensitivity in this manner, it is possible to upgrade a system employing the interrupt controller by changing the mix of edge-triggered or level-triggered interrupt requests. Thus, the system remains backward compatible with older edge-triggered peripheral devices while accommodating newer level-triggered peripheral devices. Furthermore, through the use of the LEVEL/EDGE bit 120, the interrupt controller may be configured in a manner consistent with the Intel 8259A interrupt controller. Thus, the controller in accordance with the invention is backward compatible with software written for programming the 8259A.

While the foregoing is a presentation of a preferred embodiment of the invention, it will be understood that the invention is not limited to the disclosed embodiment. Rather, other types of interrupt controllers may embody the invention by providing a plurality of interrupt request inputs programmable on a per interrupt basis for either edge-sensitivity or level-sensitivity in any manner suitable to the architecture of that particular interrupt controller.

## Claims

1. An interrupt controller (8), for a computer system having a central processing unit (CPU) (4), the controller comprising: a plurality of inputs (42, 56) connected to receive interrupt requests from a plurality of peripheral devices (26, 40); means (66) for sending an interrupt signal to the CPU (4) over an interrupt request output (58) in response to any one of the interrupt requests; a priority resolver (92) for assigning to each input in the plurality of inputs (42, 56) a priority position to create a hierarchy for the purpose of resolving which interrupt request is first serviced when time overlapping interrupt requests are received; and, means (94) for independently establishing each input to be responsive to either edge-triggered or level-triggered interrupt requests; the means (94) for establishing comprising a first initialization command register (108) having a plurality of bits, each bit respectively corresponding to one of the inputs (56, 42), and wherein each input is established to be responsive to edge-triggered interrupt requests when the respective bit is in a first state and each input is established to be responsive to level-triggered interrupt requests when the respective bit is in a second state;
the interrupt controller (8) being characterised in that the means for establishing comprises an interrupt request register (66) having a plurality of stages, a respective one of the stages corresponding to each bit and each interrupt request input, each of the stages comprising:
(a) an edge detector (242) comprising an edge detector latch (248) having a data input connected to the respective interrupt request input and a data output and operative when the respective bit of the first initialization command register (108) is programmed to the first state for receiving an edge-sensitive interrupt request and latching the request to a level converter latch (246) connected to receive and latch an interrupt request as a level,
(b) a metastability latch (222) connected to receive a level-triggered interrupt request when the respective bit is programmed to the second state and connected to receive the interrupt request held as a level by the level converter latch (246) when the respective bit is programmed to the first state, and
(c) an interrupt request register latch (236) connected to receive and hold the interrupt request held by the metastability latch (222).

2. An interrupt controller (8) as claimed in claim 1 wherein the means for establishing comprises a second initialization command register (100) which comprises a bit having a first state corresponding to edge-sensitive interrupts and a second state corresponding to bit selectable interrupt sensitivity wherein, when the bit of the second initialization command register (100) is in the first state, the edge detector (242) of each state is operative and the metastability latch (222) is connected to receive the latch edge-sensitive interrupt request, and wherein, when the bit of the second initialization command register (100) is in the second state, the edge detector is operative in accordance with the state of the respective bit of the first initialization command register (108) and the metastability latch (222) is connected in accordance with the state of the respective bit of the first initialization command register.

3. An interrupt controller (8) as claimed in claim 1 wherein the edge detector (242) comprises a synchronizing latch (254) having a data input connected to receive the respective interrupt request when the respective bit of the first initialization command register (108) is programmed to the first state, a data output connected to a data input of the edge detector latch (248), and a clock input connected to receive a system clock for latching an interrupt request from the data input to the data output, whereby the synchronizing latch (254) latches an edge-triggered interrupt request signal to the data input of the edge detector latch (248) in synchronism with the system clock.

4. An interrupt controller (8) as claimed in claim 2 comprising a data bus buffer (62) connected to a system data bus (2), the system data bus being connected to the CPU (4), an internal data bus (64) connected between the data bus buffer (62) and a read/write control logic module (74), the module (74) further including means for writing data on the system data bus (2) into the first and second initialization command registers (94) via the data bus buffer (62) and the internal data bus (64) in response to commands from the CPU (4).

5. An interrupt controller (8) as claimed in claim 4 wherein the read/write control logic module (74) includes a second interrupt output having first and second output states, the second interrupt output entering the first state when an interrupt request register bit receives and holds an interrupt request, thereby interrupting the CPU (4) to cause the CPU (4) to service the interrupt request.

6. An interrupt controller as claimed in claim 1 wherein the bits are programmable between the first and second states on a bit basis.

7. A computer system comprising:
a central processing unit (CPU) (4) having control means including a plurality of interrupt service routines for servicing interrupt requests;
a plurality of peripheral devices (26, 40) including first peripheral devices for generating edge-triggered interrupt requests and second peripheral devices for generating level-triggered interrupt requests;
a bus (2) connected to the CPU (4);
an interrupt controller (8) as claimed in any preceding claim connected to the peripheral devices (26, 40) and to the bus for interrupting the CPU in response to the edge-triggered interrupt requests from the peripherals and for causing the CPU to execute the interrupt service routines.

8. A method for receiving and servicing an edge-triggered interrupt request from a first source and a level-triggered interrupt request from a second source comprising the steps of:
programming an interrupt controller having first and second interrupt request inputs to detect edge-triggered interrupt requests incoming over the first interrupt request input and detect level-triggered interrupt requests incoming over the second interrupt request input, the programming being done on a per input basis;
detecting and latching an edge-triggered interrupt request incoming over the first input;
interrupting a central processing unit (CPU) to cause the CPU to service the edge-triggered interrupt request;
detecting a level-triggered interrupt request incoming over the second input;
interrupting the CPU to cause the CPU to service the level-triggered interrupt request;
loading the latched edge-triggered interrupt request into a first bit of an interrupt request register corresponding to the first interrupt request input; and
loading the level-triggered interrupt request into a second bit of the interrupt request register corresponding to the second interrupt request input.

9. A method as claimed in claim 8 wherein the step of programming comprises setting first and second bits of an initialization command register respectively corresponding to the first and second inputs to first and second states, respectively, the first state corresponding to edge-triggering, and the second state corresponding to level-triggering.

10. A method as claimed in claim 9 wherein the first and second interrupt request inputs have first and second interrupt vector bytes respectively corresponding thereto, and the steps of interrupting to service to the edge-triggered and level-triggered interrupt requests each include enabling the respective interrupt vector byte onto the data bus.

## Patentansprüche

1. Eine Unterbrechungssteuerung (8) für ein Computersystem mit einer Zentraleinheit (CPU) (4), wobei die Steuerung folgendes umfaßt: zahlreiche angeschlossene Eingaben (42, 56) zum Empfang von Unterbrechungsanforderungen von zahlreichen Peripheriegeräten (26, 40); ein Mittel (66) zum Senden eines Unterbrechungssignals über eine Unterbrechungsanforderungsausgabe (58) an die CPU und zwar als Reaktion auf eine Unterbrechungsanforderung; ein Prioritätsentscheider (92), der jeder Eingabe der zahlreichen Eingaben (42, 56) eine Prioritätsposition zuordnet, um eine Hierarchie zu erzeugen, nach der entschieden wird, welche Unterbrechungsanforderung zuerst berücksichtigt wird, wenn zeitlich überlappende Unterbrechungsanforderungen empfangen werden; und ein Mittel (94) zur unabhängigen Einrichtung jeder Eingabe, damit diese auf kantenausgelöste oder ebenenausgelöste Unterbrechungsanforderung reagiert; wobei das Einrichtungsmittel (94) über ein erstes Initialisierungsbefehlsregister (108) mit zahlreichen Bits verfügt, und jedes Bit einer der Eingaben (56, 42) entspricht, und wobei jede Eingabe so eingerichtet wird, daß sie auf kantenausgelöste Unterbrechungsanforderungen reagiert, wenn das entsprechende Bit in einem ersten Zustand ist, und jede Eingabe so eingerichtet wird, daß sie auf ebenenausgelöste Unterbrechungsanforderungen reagiert, wenn das entsprechende Bit in einem zweiten Zustand ist;
die Unterbrechungssteuerung (8) ist dabei dadurch gekennzeichnet, daß das Einrichtungsmittel über ein Unterbrechungsanforderungsregister (66) mit zahlreichen Stufen verfügt, wobei jeweils eine entsprechende Stufe einem Bit und einer Unterbrechungsanforderungseingabe entspricht, und die Stufen jeweils folgendes umfassen:
(a) einen Kantendetektor (242) mit einem Kantendetektor-Verriegelungsschaltkreis (248), der über eine Dateneingabe verfügt, die an die entsprechende Unterbrechungsanforderungseingabe angeschlossen ist, sowie über eine Datenausgabe und betriebsbereit ist, wenn das entsprechende Bit des ersten Initialisierungsbefehlsregisters (108) auf den ersten Zustand programmiert ist, um eine kantenempfindliche Unterbrechungsanforderung zu empfangen und die Anforderung mit einem Ebenenumwandlungs-Verriegelungsschaltkreis (246) zu verriegeln, der angeschlossen ist, um eine Unterbrechungsanforderung als Ebene zu empfangen und zu verriegeln,
(b) ein Metastabilitäts-Verriegelungsschaltkreis (222), der angeschlossen ist, um eine ebenenausgelöste Unterbrechungsanforderung zu empfangen, wenn das entsprechende Bit auf den zweiten Zustand programmiert ist, und um die vom Ebenenumwandlungs-Verriegelungsschaltkreis (246) als Ebene gehaltene Unterbrechungsanforderung zu empfangen, wenn das entsprechende Bit auf den ersten Zustand programmiert ist, und
(c) ein Unterbrechungsanforderungsregister-Verriegelungsschaltkreis (236), der angeschlossen ist, um die vom Metastabilitäts-Verriegelungsschaltkreis (222) gehaltene Unterbrechungsanforderung zu empfangen und zu halten.

2. Eine Unterbrechungssteuerung (8) nach Anspruch 1, bei der das Einrichtungsmittel über ein zweites Initialisierungsbefehlsregister (100) verfügt, das ein Bit mit einem ersten Zustand umfaßt, der den kantenempfindlichen Unterbrechungen entspricht, sowie einem zweiten Zustand, der der bitauswählbaren Unterbrechungsempfindlichkeit entspricht, und bei der, wenn das Bit des zweiten Initialisierungsbefehlsregisters (100) im ersten Zustand ist, der Kantendetektor (242) jedes Zustands betriebsbereit und der Metastabilitäts-Verriegelungsschaltkreis (222) angeschlossen ist, um die kantenempfindliche Unterbrechungsanforderung zu empfangen, und bei der, wenn das Bit des zweiten Initialisierungsbefehlsregisters (100) im zweiten Zustand ist, der Kantendetektor in Abhängigkeit vom Zustand des entsprechenden Bits des ersten Initialisierungsbefehlsregisters (108) betriebsbereit und der Metastabilitäts-Verriegelungsschaltkreis (222) in Abhängigkeit vom Zustand des entsprechenden Bits des ersten Initialisierungsbefehlsregisters angeschlossen ist.

3. Eine Unterbrechungssteuerung (8) nach Anspruch 1, bei der der Kantendetektor (242) mit einem Synchronisierungs-Verriegelungsschaltkreis (254) ausgestattet ist, der über eine Dateneingabe verfügt, die angeschlossen ist, um die entsprechende Unterbrechungsanforderung zu empfangen, wenn das entsprechende Bit des ersten Initialisierungsbefehlsregisters (108) auf den ersten Zustand programmiert ist, sowie über eine Datenausgabe, die mit der Dateneingabe des Kantendetektor-Verriegelungsschaltkreises (248) verbunden ist, und eine Takteingabe, die angeschlossen ist, um einen Systemtaktgeber zu empfangen, um dadurch eine Unterbrechungsanforderung von der Dateneingabe mit der Datenausgabe zu verriegeln, wobei der Synchronisierungs-Verriegelungsschaltkreis (254) ein kantenausgelöstes Unterbrechungsanforderungssignal synchron zum Systemtaktgeber mit der Dateneingabe des Kantendetektor-Verriegelungsschaltkreises (248) verriegelt.

4. Eine Unterbrechungssteuerung (8) nach Anspruch 2 mit einem Datenbuspuffer (62), der mit einem Systemdatenbus (2) verbunden ist, wobei der Systemdatenbus an die CPU (4) angeschlossen ist, sowie einem internen Datenbus (64), der zwischen dem Datenbuspuffer (62) und einem Lese/SchreibSteuerlogikmodul (74) angeschlossen ist, wobei das Modul (74) weiterhin ein Mittel umfaßt, das als Reaktion auf Befehle der CPU (4) über den Datenbuspuffer (62) und den internen Datenbus (64) Daten in den Systemdatenbus (2) und dann in das erste und zweite Initialisierungsbefehlsregister (94) schreibt.

5. Eine Unterbrechungssteuerung (8) nach Anspruch 4, bei der das Lese/Schreib-Steuerlogikmodul (74) über eine zweite Unterbrechungsausgabe mit einem ersten und zweiten Ausgabezustand verfügt, wobei die zweite Unterbrechungsausgabe in den ersten Zustand geht, wenn ein Bit des Unterbrechungsanforderungsregisters eine Unterbrechungsanforderung empfängt und hält, wodurch die CPU (4) davon abgehalten wird, die Unterbrechungsanforderung zu verarbeiten.

6. Eine Unterbrechungssteuerung nach Anspruch 1, bei der die Bits auf einer Bitbasis zwischen dem ersten und zweiten Zustand programmierbar sind.

7. Ein Computersystem mit:
einer Zentraleinheit (CPU) (4), die über Steuermittel mit zahlreichen Unterbrechungs-Serviceroutinen zur Verarbeitung von Unterbrechungsanforderungen verfügt;
zahlreichen Peripheriegeräten (26, 40), einschließlich ersten Peripheriegeräten, um kantenausgelöste Unterbrechungsanforderungen zu erzeugen, und zweiten Peripheriegeräten, um ebenenausgelöste Unterbrechungsanforderungen zu erzeugen;
einem Bus (2), der an die CPU (4) angeschlossen ist;
einer Unterbrechungssteuerung (8) nach einem der oben genannten Ansprüche, die an die Peripheriegeräte (26, 40) und den Bus angeschlossen ist, um die CPU als Reaktion auf die kantenausgelösten Unterbrechungsanforderungen von den Peripheriegeräten zu unterbrechen und sie zu veranlassen, die Unterbrechungs-Serviceroutinen auszuführen.

8. Ein Verfahren zum Empfangen und Verarbeiten einer kantenausgelösten Unterbrechungsanforderung von einer ersten Quelle und einer ebenenausgelösten Unterbrechungsanforderung von einer zweiten Quelle, wobei das Verfahren folgende Schritte umfaßt:
die Programmierung einer Unterbrechungssteuerung mit ersten und zweiten Unterbrechungsanforderungseingaben, um kantenausgelöste Unterbrechungsanforderungen zu erfassen, die über die erste Unterbrechungsanforderungseingabe eingehen, und ebenenausgelöste Unterbrechungsanforderungen zu erfassen, die über die zweite Unterbrechungsanforderungseingabe eingehen, wobei die Programmierung pro Eingabe erfolgt;
die Erfassung und Verriegelung einer kantenausgelösten Unterbrechungsanforderung, die über die erste Eingabe eingeht;
die Unterbrechung einer Zentraleinheit (CPU), um sie zu veranlassen, die kantenausgelöste Unterbrechungsanforderung zu verarbeiten;
die Erfassung einer ebenenausgelösten Unterbrechungsanforderung, die über die zweite Eingabe eingeht;
die Unterbrechung der CPU, um sie zu veranlassen, die ebenenausgelöste Unterbrechungsanforderung zu verarbeiten;
das Laden der verriegelten, ebenenausgelösten Unterbrechungsanforderung in ein erstes Bit eines Unterbrechungsanforderungsregisters, das der ersten Unterbrechungsanforderungseingabe entspricht; und
das Laden der ebenenausgelösten Unterbrechungsanforderung in ein zweites Bit eines Unterbrechungsanforderungsregisters, das der zweiten Unterbrechungsanforderungseingabe entspricht.

9. Ein Verfahren nach Anspruch 8, bei dem der Programmierschritt die Einstellung eines ersten und zweiten Bits eines Initialisierungsbefehlsregisters, das der ersten bzw. zweiten Eingabe entspricht, auf einen ersten bzw. zweiten Zustand umfaßt, wobei der erste Zustand einer Kantenauslösung und der zweite Zustand einer Ebenenauslösung entspricht.

10. Ein Verfahren nach Anspruch 9, bei dem die erste und zweite Unterbrechungsanforderungseingabe über ein jeweils entsprechendes erstes und zweites Unterbrechungsvektorbyte verfügt, und die Schritte zur Unterbrechung der Verarbeitung der kantenausgelösten und ebenenausgelösten Unterbrechungsanforderungen jeweils die Aktivierung des entsprechenden Unterbrechungsvektorbyte auf dem Datenbus beinhalten.

## Revendications

1. Contrôleur d'interruption (8) destiné à un système d'ordinateur comportant une unité centrale de traitement (UC) (4), le contrôleur comprenant : une pluralité d'entrées (42, 56) reliées de façon à recevoir des demandes d'interruptions provenant d'une pluralité de dispositifs périphériques (26, 40), un moyen (66) destiné à envoyer un signal d'interruption vers l'unité centrale de traitement (4) sur une sortie de demandes d'interruptions (58) en réponse à l'une quelconque des demandes d'interruptions, un dispositif de définition de priorité (92) destiné à affecter à chaque entrée parmi la pluralité des entrées (42, 56) une position de priorité afin de créer une hiérarchie, dans le but de définir quelle demande d'interruption est desservie en premier lorsque des demandes d'interruptions se chevauchant dans le temps sont reçues, et un moyen (94) destiné à établir indépendamment chaque entrée de façon à ce qu'elle réponde à des demandes d'interruptions soit déclenchées par un front, soit déclenchées par un niveau, le moyen (94) destiné à établir comprenant un premier registre de commande d'initialisation (108) comportant une pluralité de bits, chaque bit correspondant respectivement à l'une des entrées (56, 42), et dans lequel chaque entrée est établie de façon à répondre à des demandes d'interruptions déclenchées par un front lorsque le bit respectif est dans un premier état et chaque entrée est établie de façon à répondre à des demandes d'interruptions déclenchées par un niveau lorsque le bit respectif est dans un second état,
le contrôleur d'interruption (8) étant caractérisé en ce que le moyen destiné à établir comprend un registre de demandes d'interruptions (66) comportant une pluralité d'étages, un étage respectif parmi les étages correspondant à chaque bit et à chaque entrée de demandes d'interruptions, chacun des étages comprenant :
(a) un détecteur de front (242) comprenant un circuit à verrouillage de détecteur de front (248) comportant une entrée de données reliée à l'entrée de demandes d'interruptions respective et une sortie de donnée, et agissant lorsque le bit respectif du premier registre de commande d'initialisation (108) est programmé dans le premier état afin de recevoir une demande d'interruption sensible au front et mémorisant la demande vers un circuit à verrouillage de convertisseur en niveau (246) relié de façon à recevoir et à mémoriser une demande d'interruption sous forme d'un niveau.
(b) un circuit à verrouillage à métastabilité (222) relié de façon à recevoir une demande d'interruption déclenchée par un niveau lorsque le bit respectif est programmé dans le second état et relié de façon à recevoir la demande d'interruption conservée sous forme d'un niveau par le circuit à verrouillage de convertisseur en niveau (246) lorsque le bit respectif est programmé dans le premier état, et
(c) un circuit à verrouillage de registre de demandes d'interruptions (236) relié de façon à recevoir et à conserver la demande d'interruption qui a été conservée par le circuit à verrouillage à métastabilité (222).

2. Contrôleur d'interruption (8) selon la revendication 1, dans lequel le moyen destiné à établir comprend un second registre de commande d'initialisation (100) qui comprend un bit présentant un premier état correspondant aux interruptions sensibles au front et un second état correspondant à un type de sensibilité d'interruption qui peut être sélectionné par bit, dans lequel, lorsque le bit du second registre de commande d'initialisation (100) est dans le premier état, le détecteur de front (242) de chaque état est rendu fonctionnel et le circuit à verrouillage à métastabilité (222) est relié de façon à recevoir la demande d'interruption sensible au front du circuit à verrouillage, et dans lequel, lorsque le bit du second registre de commande d'initialisation (100) est dans le second état, le détecteur de front est rendu fonctionnel suivant l'état du bit respectif du premier registre de commande d'initialisation (108) et le circuit à verrouillage à métastabilité (222) est relié suivant l'état du bit respectif du premier registre de commande d'initialisation.

3. Contrôleur d'interruption (8) selon la revendication 1, dans lequel le détecteur de front (242) comprend un circuit à verrouillage de synchronisation (254) ayant une entrée de données reliée de façon à recevoir la demande d'interruption respective lorsque le bit respectif du premier registre de commande d'initialisation (108) est programmé dans le premier état, une sortie de données reliée à une entrée de données du circuit à verrouillage de détecteur de front (248), et une entrée d'horloge reliée de façon à recevoir une horloge du système afin de mémoriser une demande d'interruption allant de l'entrée de données vers la sortie de données, d'où il résulte que le circuit à verrouillage de synchronisation (254) mémorise un signal de demande d'interruption déclenchée par un front vers l'entrée de données du circuit à verrouillage de détecteur de front (248) en synchronisme avec l'horloge du système.

4. Contrôleur d'interruption (8) selon la revendication 2 comprenant une mémoire tampon de bus de données (62) reliée à un bus de données du système (2), le bus de données du système étant relié à l'unité centrale de traitement (UC) (4), un bus de données interne (64) relié entre la mémoire tampon de bus de données (62) et un module logique de commandes de lecture/écriture (74), le module (74) comprenant en outre un moyen destiné à écrire des données qui sont sur le bus de données du système (2) jusque dans les premier et second registres de commande d'initialisation (94) par l'intermédiaire de la mémoire tampon de bus de données (62) et du bus de données interne (64), en réponse aux commandes provenant de l'unité centrale de traitement (4).

5. Contrôleur d'interruption (8) selon la revendication 4, dans lequel le module logique de commande de lecture/écriture (74) comprend une seconde sortie d'interruptions présentant des premier et second états de sortie, la seconde sortie d'interruptions entrant dans le premier état lorsqu'un bit de registre de demandes d'interruptions reçoit et conserve une demande d'interruption, en interrompant ainsi l'unité centrale de traitement (4) de façon à amener l'unité centrale de traitement (4) à desservir la demande d'interruption.

6. Contrôleur d'interruption selon la revendication 1, dans lequel les bits sont programmables bit par bit entre les premier et second états.

7. Système d'ordinateur comprenant :
une unité centrale de traitement (UC) (4) comportant un moyen de commande comprenant une pluralité de sous-programmes de services d'interruptions destinés à desservir des demandes d'interruptions,
une pluralité de dispositifs périphériques (26, 40) comprenant des premiers dispositifs périphériques destinés à générer des demandes d'interruptions déclenchées par un front et des seconds dispositifs périphériques destinés à générer des demandes d'interruptions déclenchées par un niveau,
un bus (2) relié à l'unité centrale de traitement (4),
un contrôleur d'interruption (8) selon l'une quelconque des revendications précédentes, relié aux dispositifs périphériques (26, 40) et au bus, afin d'interrompre l'unité centrale de traitement en réponse aux demandes d'interruptions déclenchées par un front provenant des périphériques et destiné à amener l'unité centrale de traitement à exécuter les sous-programmes de services d'interruptions.

8. Procédé destiné à recevoir et à desservir une demande d'interruption déclenchée par un front provenant d'une première source et une demande d'interruption déclenchée par un niveau provenant d'une seconde source, comprenant les étapes consistant à :
programmer un contrôleur d'interruption comportant des première et seconde entrées de demandes d'interruptions afin de détecter des demandes d'interruptions déclenchées par un front arrivant sur la première entrée de demandes d'interruptions et de détecter des demandes d'interruptions déclenchées par un niveau arrivant sur la seconde entrée de demandes d'interruptions, la programmation étant exécutée sur un principe dépendant de l'entrée,
détecter et mémoriser une demande d'interruption déclenchée par un front arrivant sur la première entrée,
interrompre une unité centrale de traitement (UC) pour amener l'unité centrale de traitement à desservir la demande d'interruption déclenchée par un front,
détecter une demande d'interruption déclenchée par un niveau arrivant sur la seconde entrée,
interrompre l'unité centrale de traitement pour amener l'unité centrale de traitement à desservir la demande d'interruption déclenchée par un niveau,
charger la demande d'interruption déclenchée par un front mémorisée dans un premier bit d'un registre de demandes d'interruptions correspondant à la première entrée de demandes d'interruptions, et
charger la demande d'interruption déclenchée par un niveau dans un second bit d'un registre de demandes d'interruptions correspondant à la seconde entrée de demandes d'interruptions.

9. Procédé selon la revendication 8, dans lequel l'étape consistant à programmer comprend l'établissement des premier et second bits d'un registre de commande d'initialisation, correspondant respectivement aux première et seconde entrées dans des premier et second états, respectivement, le premier état correspondant à un déclenchement par un front, et le second état correspondant à un déclenchement par un niveau.

10. Procédé selon la revendication 9, dans lequel les première et seconde entrées de demandes d'interruptions comportent des premier et second octets de vecteurs d'interruptions correspondant respectivement à celles-ci, et les étapes consistant à exécuter l'interruption pour desservir les demandes d'interruptions déclenchées par un front et déclenchées par un niveau comprennent chacune la validation de l'octet de vecteur d'interruption respectif sur le bus de données.
